# EUROPÄISCHE PATENTSCHRIFT

(11) **EP 0 679 498 B1**
(45) Veröffentlichungstag und Bekanntmachung des Hinweises auf die Patenterteilung: **10.06.1998**
(21) Anmeldenummer: 95105599.5
(22) Anmeldetag: 13.04.1995
(51) Int. Cl.: B29C 49/30

(54) **Vorrichtung zur Herstellung von Rohren aus thermoplastischem Kunststoff mit Querprofilierung**
Apparatus for producing corrugated pipes made of thermoplastic material
Dispositif pour la fabrication de tubes ondulés en matière thermoplastique

(30) Priorität: 29.04.1994 DE 4414977
(43) Veröffentlichungstag der Anmeldung: 02.11.1995
(73) Patentinhaber: Hegler, Wilhelm, D-97688 Bad Kissingen (DE)
(72) Erfinder: Hegler, Ralph-Peter, Dr., D-97688 Bad Kissingen (DE); Hegler, Wilhelm, D-97688 Bad Kissingen (DE)
(74) Vertreter: Rau, Manfred, Dr. Dipl.-Ing.

(56) Entgegenhaltungen:
- EP-A- 0 007 556
- DE-U- 9 311 140

## Beschreibung

Die Erfindung betrifft eine Vorrichtung nach dem Oberbegriff des Anspruches 1.

Eine derartige aus der EP 0 007 556 B1 (entspr. US-PS 4 212 618) bekannte Vorrichtung ermöglicht, daß nur eine möglichst geringe Gesamtanzahl von im Kreislauf geführten Formabschnitts-Hälften erforderlich ist. Die Formabschnitts-Hälften werden auf der Rücklaufstrecke voneinander getrennt und mit einer solchen mittleren Geschwindigkeit zurückgeführt, daß die Rückführzeit für jede Formabschnitts-Hälfte kleiner ist als der Zeitabschnitt, den eine Formabschnitts-Hälfte auf der Formstrecke zur Weiterbewegung um eine ihrer Länge entsprechende Strecke benötigt. Hierdurch werden im Vergleich zu den üblichen Vorrichtungen mit ständig umlaufenden Formabschnitts-Hälften mehr als 50 % der Formabschnitts-Hälften eingespart. Auf jeder Rücklaufstrecke befindet sich jeweils nur eine Formabschnitts-Hälfte, die in einer kontinuierlichen, beschleunigten und wieder abgebremsten Bewegung zum stromaufwärtsliegenden Ende der Vorgangsstrecke zurückgeführt wird. Infolge der geringen Anzahl der benötigten Formabschnitts-Hälften kann die Vorrichtung rasch und ohne großen Aufwand auf einen anderen Rohrdurchmesser umgerüstet werden, was insbesondere bei der Herstellung von Rohren mit sehr großen Durchmessern besonders wichtig ist, da derartige Rohre im allgemeinen nur in verhältnismäßig geringer Menge hergestellt werden, so daß es nicht zweckmäßig ist, für den Rohrdurchmesser eine vollständige Vorrichtung bereitzustellen. Eine derartige Vorrichtung erbringt auch Ersparnisse bei der Herstellung von Sonderformen für Rohre sowie bei der Herstellung von Übergangsstücken, Muffen u.s.w., da auch für diese Sonderformen nur eine sehr begrenzte Anzahl der teuren Formabschnitts-Hälften bereitgehalten werden muß.

Aus der EP 0 048 113 A1 (entspr. US 4 325 685) ist eine Vorrichtung zur Herstellung von Rohren aus thermoplastischem Kunststoff mit Querprofilierung bekannt, bei der einzelne Formabschnitts-Hälften endlos auf zwei geschlossenen Bahnen umlaufen, wobei sich jeweils zwei Formabschnitts-Hälften auf einer Formstrecke zu einem Formabschnitt zusammenfügen, wobei wiederum Formabschnitte dicht an dicht aneinanderliegen und eine Form bilden, in der ein aus einem Spritzkopf eines Extruders bzw. einer Spritzgießmaschine austretender noch warmplastischer Schlauch zu einem profilierten Rohr geformt wird. Die einzelnen Formabschnitts-Hälften weisen mehrere unterschiedliche Profile auf, von denen jeweils eines in Funktion bringbar ist. Hierzu sind die Formabschnitts-Hälften auf Trägern quer zu ihrer Bewegungsrichtung verschiebbar angeordnet und werden durch ein Weichensystem in ihre Arbeitsstellung gebracht. Hierdurch können auch Formabschnitts-Hälften in Eingriff gebracht werden, die eine Muffe und/oder ein Spitzende eines Rohres ausformen.

Aus DE-G 93 11 140 U1 ist eine Vorrichtung zum Herstellen von Wellrohren aus thermoplastischem Kunststoff bekannt, bei der Formabschnitts-Hälften paarweise aneinanderliegend in einer Formstrecke mittels eines Antriebsritzels gefördert werden, das in ein Zahnprofil an der Unterseite der Formabschnitts-Hälften eingreift. Der Rücktransport erfolgt ebenfalls mittels Ritzeln, die querbeweglich antreibbar sind, wodurch die Formabschnitts-Hälften aus der Formstrecke in eine Rücklaufstrecke und aus der Rücklaufstrecke wieder in die Formstrecke bringbar sind. Die Rücklaufstrecken sind anschließend an die Querförderritzel mit Parkstationen für Formabschnitts-Hälften versehen, die durch eigene Antriebe in die Rücklaufstrecken einführbar sind. Wenn ein Paar zusätzlicher Formabschnitts-Hälften, beispielsweise zur Formung von Muffen und/oder Spitzenden an dem zu erzeugenden Rohr, in die Formstrecke gebracht werden sollen, dann werden die entsprechenden zusätzlichen Formabschnitts-Hälften in die Rücklaufstrecke eingeführt und zum stromaufwärtsliegenden Ende der Formstrecke gebracht und dort in die Formstrecke eingeführt. Gleichzeitig wird am stromabwärtigen Ende der Formstrecke ein Paar von Formabschnitts-Hälften nach der Querförderung aus der Formstrecke heraus und vor dem Eintritt in die Rücklaufstrecke in die Parkposition verbracht. Wenn die zusätzlichen Formabschnitts-Hälften wieder aus dem Umlauf herausgenommen werden sollen, dann wird unmittelbar vor der Querförderung dieser zusätzlichen Formabschnitts-Hälften aus der Formstrecke heraus die geparkte Formabschnitts-Hälfte in die jeweilige Rücklaufstrecke eingeführt, so daß die zusätzliche Formabschnitts-Hälfte wieder geparkt werden kann. Die Formstrecke bleibt hierdurch immer gleich lang; es können nur zusätzliche Formabschnitts-Hälften eingeführt werden, die exakt die Länge der üblichen Formabschnitts-Hälften zur Herstellung des gewellten Rohres aufweisen.

Der Erfindung liegt die Aufgabe zugrunde, eine Vorrichtung der gattungsgemäßen Art so auszugestalten, daß mit konstruktiv geringem Aufwand zusätzliche Formabschnitts-Hälften eingefügt bzw. wieder aus der Formstrecke entnommen werden können.

Diese Aufgabe wird erfindungsgemäß durch die Merkmale im Kennzeichnungsteil des Anspruches 1 gelöst. Durch die erfindungsgemäßen Maßnahmen werden zusätzliche Formabschnitts-Hälften, beispielsweise zur Formung einer Muffe und/oder eines Spitzendes im kontinuierlich hergestellten Rohr, stirnseitig vor das stromabwärtsliegende Ende der Form geschoben und hiermit in den normalen Rückführzyklus eingeführt. Die das normale gewellte Rohr formenden Formabschnitts-Hälften bleiben sämtlich im Umlauf, d.h. die Formstrecke wird jeweils beim Einführen zusätzlicher Formabschnitts-Hälften entsprechend verlängert bzw. nach deren Herausnahme aus der Formstrecke verkürzt. Hierdurch ist es auch möglich, zusätzliche Formabschnitts-Hälften einzusetzen, deren Länge nicht identisch der der normalen Formabschnitts-Hälften ist. Hierdurch wird eine hohe Flexibilität der Vorrichtung erreicht.

Weitere vorteilhafte und zum Teil erfinderische Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Vorrichtung zur Herstellung von Rohren aus thermoplastischen Kunststoffen mit Querprofilierung nach dem Stand der Technik in Draufsicht,
- Fig. 2: einen vertikalen Querschnitt entsprechend der Schnittlinie II-II in Fig. 1 in gegenüber Fig. 1 vergrößerter Teildarstellung und
- Fig. 3: eine Draufsicht auf eine Vorrichtung zur Herstellung von Rohren aus thermoplastischem Kunststoff mit Querprofilierung in gegenüber Fig. 1 vergrößerter Darstellung, die den gegenüber dem Stand der Technik durch die Erfindung geänderten Bereich der Vorrichtung zeigt.

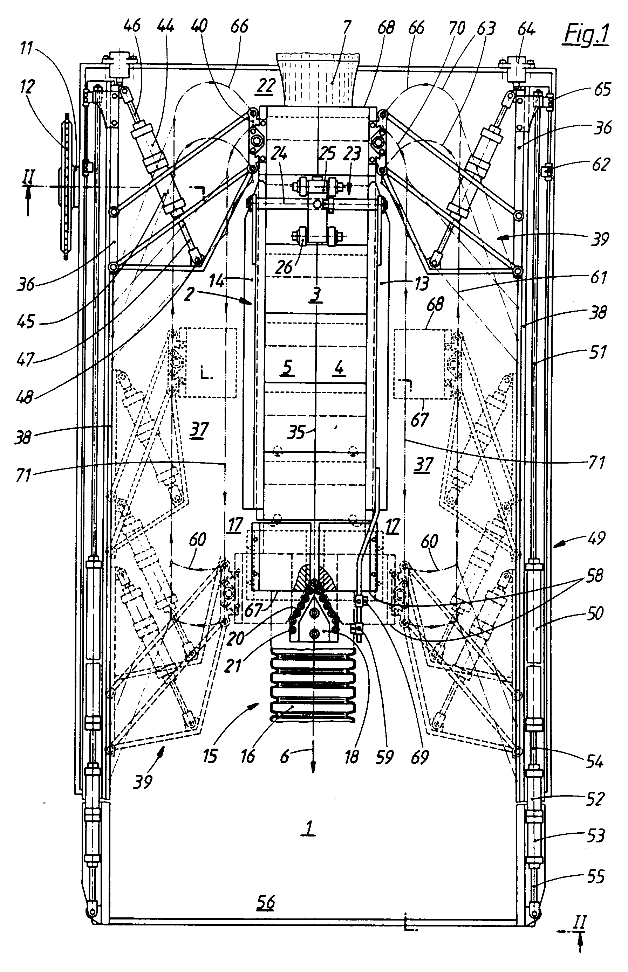

Fig. 1 zeigt eine Vorrichtung zur Herstellung von Rohren aus thermoplastischem Kunststoff mit Querprofilierung, wie sie aus der EP 0 007 556 B1 (entspr. US-Patent 4 212 618, JP-PS 1 102 384, CA-PS 1 128 265) bekannt ist und wie sie im Rahmen dieser Erfindung eingesetzt wird.

Die Vorrichtung weist eine Grundplatte 1 auf, auf der sich eine Formstrecke 2 befindet. Auf dieser Formstrecke 2 werden Formabschnitte 3 aneinandergereiht, die jeweils aus zwei Formabschnitts-Hälften 4, 5 bestehen. Solange die Formabschnitts-Hälften 4, 5 jeweils paarweise unter Bildung eines Formabschnitts 3 aneinanderliegen und solange benachbarte Formabschnitte 3 unter Bildung der Form aneinanderliegen, bewegen sie sich geradlinig entsprechend einer Produktionsrichtung 6 auf der Grundplatte 1. Zum kontinuierlichen Antrieb der durch die Formabschnitte 3 gebildeten Form ist unmittelbar hinter einem Spritzkopf 7 eines Extruders ein Antriebsritzel 8 vorgesehen, das durch eine Ausnehmung 9 in der Grundplatte 1 hindurchragt und in ein an der jeweiligen Unterseite der Formabschnitts-Hälften 4, 5 ausgebildetes Zahnprofil 10 eingreift. Das Antriebsritzel 8 ist drehfest auf einer Antriebswelle 11 angebracht, die unterhalb der Grundplatte 1 gelagert ist und über ein Antriebsrad 12 von einem nicht dargestellten Motor angetrieben wird. Die Formabschnitts-Hälften 4, 5 werden auf der Formstrecke 2 jeweils durch Führungsleisten 13, 14 zusammengepreßt.

Aus dem Spritzkopf 7 wird in die auf der Formstrecke 2 befindliche Form ein warmplastischer Schlauch extrudiert, der während der Bewegung der Form in Produktionsrichtung selbst zu einem Rohr 15 mit Querrillen 16 geformt wird, wie es beispielsweise aus der DE-OS 20 61 027 (entspr. US-PS 3 776 679) bekannt ist.

An dem Spritzkopf 7 entgegengesetzten stromabwärtigen Ende 17 der Formstrecke 2 ist auf der Grundplatte 1 eine Keilplatte 18 angeordnet, die mit an der jeweiligen - in Produktionsrichtung 6 gesehen - stromabwärtigen Innenkante der Formabschnitts-Hälften 4, 5 angeordneten Schrägflächen 19 zusammenwirkt, so daß die Formabschnitts-Hälften 4, 5 eines Formabschnitts 3 beim Auftreffen auf die Keilplatte 18 quer zur Produktionsrichtung 6 auseinandergeschoben werden. In diesem Bereich sind selbstverständlich keine Führungsleisten 13, 14 vorhanden. Die Keilplatte 18 weist an ihren Keilflächen 20 Rollen 21 auf, die zur Verminderung der Reibung zwischen den Formabschnitts-Hälften 4, 5 einerseits und der Keilplatte 18 andererseits beitragen.

Im Bereich des Antriebsritzels 8, also im Bereich des dem Spritzkopf 7 benachbarten stromaufwärtigen Endes 22 der Formstrecke 2, ist oberhalb von dieser eine Gegenlagerung 23 vorgesehen, die die Kräfte aufnimmt, die vom Antriebsritzel 8 nach oben auf die Formabschnitts-Hälften 4, 5 ausgeübt werden. Die Gegenlagerung 23 weist eine Gegendruckachse 24 auf, die an den Führungsleisten 13, 14 befestigt ist. An der Gegendruckachse 24 ist ein Lagerbock 25 angebracht, in dem Andrückrollen 26 drehbar gelagert sind, die gegen die Oberseite der Formabschnitts-Hälften 4, 5 anliegen und diese gegen die Grundplatte 1 drücken. Die Gegenlagerung 23 ist insbesondere deshalb von Bedeutung, weil bei der dargestellten Vorrichtung zur Herstellung des Rohres 15 das Anlegen des warmplastischen Schlauches an die Innenwände 27 der Formabschnitts-Hälften 4, 5 dadurch erreicht wird, daß aus dem Form-Hohlraum 28 der Form bzw. der Formabschnitte 3 über in den Formabschnitts-Hälften 4, 5 ausgebildete - in der Zeichnung nicht dargestellte - Kanäle Luft abgesaugt wird. Diese Absaugung erfolgt über in der Grundplatte 1 ausgebildete Vakuum-Kanäle 29, die mit den in den Formabschnitts-Hälften 4, 5 ausgebildeten Kanälen in Verbindung stehen. Die Ausbildung und Anordnung der Vakuum-Kanäle in den Formabschnitts-Hälften 4, 5 ist im einzelnen in der DE-PS 12 03 940 (entspr. GB-PS 971 021) dargestellt und beschrieben, worauf informationshalber verwiesen werden darf. Da die Formabschnitts-Hälften 4, 5 außerdem noch gekühlt werden, befinden sich in der Grundplatte 1 weiterhin Kühlwasserzuführkanäle 30 und Kühlwasserrücklaufkanäle 31, durch die Kühlflüssigkeit zu- und wieder abgeführt wird. Ausbildung und Anordnung solcher Kühlwasserkanäle in den Formabschnitts-Hälften 4, 5 sind in der DE-OS 20 61 027 (entspr. US-PS 3 776 679) dargestellt und beschrieben, worauf informationshalber verwiesen werden darf. Durch das Andrücken der Formabschnitts-Hälften 4, 5 auf die Grundplatte 1 mittels der Gegenlagerung 23 werden also Unterdruck- und Kühlwasserverluste vermieden.

An den Außenseiten 32 der Formabschnitts-Hälften 4, 5 sind Spannprismen 33 angebracht, an die jeweils eine Rückführ-Vorrichtung 34 ankoppelbar ist. Jede der beiden spiegelsymmetrisch zur Mittel-Längs-Achse 35 der Formstrecke 2 angeordneten Vorrichtungen 34 weist einen Schlitten 36 auf, der an einer längs einer Rücklaufstrecke 37 angeordneten Laufschiene 38 geführt ist. Die Laufschiene 38 ist mit einem Schwalbenschwanzprofil versehen, auf dem der Schlitten 36 mit einer entsprechend angepaßten Ausnehmung gleitend verschiebbar angeordnet ist. Selbstverständlich kann auch für den Schlitten 36 eine Rollenführung vorgesehen werden, wodurch ein reibungsärmerer Lauf des Schlittens 36 erreichbar wäre.

Am Schlitten 36 ist ein durch zwei Parallellenker gebildeter Schwenkarm 39 angelenkt, an dessen äußerem Ende eine Spannvorrichtung 40 angelenkt ist, die aufgrund der Parallellenker-Ausführung bei linearen Verschiebungen des Schlittens 36 und bei Schwenkbewegungen des Schwenkarms 39 immer parallel zu sich selbst verschoben wird. An jeder Spannvorrichtung 40 sind von einem Linearantrieb 41 betätigbare Spannzapfen 42 gelagert, die in angepaßte Ausnehmungen 43 am jeweiligen Spannprisma 33 eingreifen, wodurch eine Kopplung zwischen einer Rückführ-Vorrichtung 34 und einer zugeordneten Formabschnitts-Hälfte 4 bzw. 5 hergestellt wird.

Zur Schwenkbewegung der Schwenkarme 39 sind jeweils durch Pneumatikzylinder gebildete Linearantriebe 44, 45 in Tandemanordnung vorgesehen, wobei die Kolbenstange 46 des einen Linearantriebes 44 mit ihrem freien Ende am Schlitten 36 im Bereich von dessen - in Produktionsrichtung 6 gesehen - stromaufwärtigen Ende angelenkt ist, während die Kolbenstange 47 des anderen Linearantriebes 45 am Schwenkarm 39 angelenkt ist und zwar an einem von dem Schwenkarm 39 in Produktionsrichtung 6 vorspringenden Stützlager 48.

Die Bewegung des Schlittens 36 in Längsrichtung der Vorrichtung, also parallel zur Mittel-Längs-Achse 35 erfolgt mittels eines Antriebes 49, der als Hauptelement einen pneumatisch beaufschlagbaren Kolben-Zylinder-Antrieb 50 aufweisen kann, dessen Kolbenstange 51 mit dem Schlitten 36 verbunden ist. Der Antrieb 49 kann zwei weitere pneumatisch beaufschlagbare Kolben-Zylinder-Antriebe 52, 53 in Reihenanordnung zum Kolben-Zylinder-Antrieb 50 aufweisen, die zur Beschleunigung, Verzögerung und Dämpfung der Bewegungen herangezogen werden. Die Kolbenstange 54 des Antriebs 52 ist am Antrieb 50 angebracht; die Kolbenstange 55 des Antriebs 53 ist im stromabwärtigen Endbereich 56 der Grundplatte 1 an der Läufschiene 38 angelenkt.

Wenn eine Spannvorrichtung 40 nicht mit einer Formabschnitts-Hälfte 4 bzw. 5 gekoppelt ist, dann stützt sie sich über eine Stützrolle 57 auf der Grundplatte 1 ab.

Die bisher beschriebene Vorrichtung arbeitet wie folgt:

Ausgegangen wird von der in Fig. 1 dargestellten Stellung der bereits mittels der Keilplatte 18 teilweise auseinandergefahrenen Formabschnitts-Hälften 4, 5, die sich also am stromabwärtigen Ende 17 der Formstrecke 2 befinden. In dieser Stellung betätigt die voreilende Kante 58 der Formabschnitts-Hälfte 4 einen Schalter 59, wodurch der Linearantrieb 41 betätigt wird und eine Verriegelung zwischen der Spannvorrichtung 40 und dem Spannprisma 33 der jeweiligen Formabschnitts-Hälfte 4 bzw. 5 hergestellt wird. Hiernach werden über eine übliche Folgesteuerung der Linearantrieb 44 und der Kolben-Zylinder-Antrieb 52 derart mit Druckluft beaufschlagt, daß die Kolbenstangen 46, 54 eingefahren werden. Hierdurch bewegt sich die jeweilige Formabschnitts-Hälfte 4 bzw. 5 zusammen mit der Spannvorrichtung 40 auf einem gekrümmten Bahnabschnitt 60 vollständig aus der Formstrecke 2. Am Ende dieses jeweiligen gekrümmten Bahnabschnitts 60, gleichzeitig also am Anfang eines langen, parallel zur Achse 35 verlaufenden geradlinigen Bahnabschnitts 61 jeder Rücklaufstrecke 37, werden die Kolben-Zylinder-Antriebe 50 und 53 derart mit Druckluft beaufschlagt, daß ihre Kolbenstangen 51 und 55 ausfahren, wodurch jeweils die Schlitten 36 mit der angekoppelten Formabschnitts-Hälfte 4 bzw. 5 auf eine Geschwindigkeit bis zu 5 m/sec beschleunigt und längs des geradlinigen Bahnabschnitts 61 in den dem Spritzkopf 7 benachbarten stromaufwärtigen Bereich der Grundplatte 1 zurückbewegt werden. Kurz vor Erreichen der Endstellung wird ein Schalter 62 betätigt, wodurch die Linearantriebe 44, 45 derart mit Druckluft beaufschlagt werden, daß ihre Kolbenstangen 46, 47 ausfahren. Der Schalter 62 ist auf einer Führungsschiene 62a verschieb-und einstellbar angebracht. Hierdurch bewegt sich die jeweilige Spannvorrichtung 40 mit der angekoppelten Formabschnitts-Hälfte 4 bzw. 5 auf einem gekrümmten Bahnabschnitt 63 wieder zur Formstrecke 2 hin. Gleichzeitig wird ein nicht dargestelltes Ventil des Kolben-Zylinder-Antriebs 52 geöffnet, so daß seine Kolbenstange 54 durch die Trägheit der Rückführ-Vorrichtung 34 und der angekoppelten Formabschnitts-Hälfte 4 bzw. 5 herausgezogen wird, wodurch aufgrund der Drosselwirkung des erwähnten nicht dargestellten Ventils die bewegte Masse abgebremst wird. Die Restdämpfung und Abbremsung erfolgt durch an der Grundplatte 1 angebrachte Stoßdämpfer 64.

Wenn alle Kolbenstangen 51, 54, 55 der Kolben-Zylinder-Antriebe 50, 52, 53 ausgefahren und der Stoßdämpfer 64 zusammengedrückt ist, wird ein auf der Führungsschiene 62a in deren Längsrichtung verschiebbarer und auf dieser einstellbarer Schalter 65 betätigt, wodurch die pneumatisch beaufschlagbaren Kolben-Zylinder-Antriebe 50 und 53 in der Weise mit Druckluft beaufschlagt werden, daß deren Kolbenstangen 51 und 55 eingefahren werden. Hierdurch wird eine Bewegung der noch an die jeweilige Spannvorrichtung 40 angekoppelten Formabschnitts-Hälfte 4 bzw. 5 längs eines geradlinigen schräg zur Achse 35 verlaufenden Bahnabschnitts 66 bewirkt, und zwar bis die jeweilige, seitlich an die Formstrecke 2 herangeführte Formabschnitts-Hälfte 4 bzw. 5 mit ihrer vorderen stromabwärtigen Stirnseite 67 gegen die zugewandte stromaufwärtige Stirnseite 68 der nächsten stromabwärtigen Formabschnitts-Hälfte 4 bzw. 5 fest anliegt. Da die aus Formabschnitten 3 bestehende geschlossene Form in Produktionsrichtung 6 mit Hilfe des Antriebsritzels 8 geschoben wird und da zwischen den Formabschnitten 3 und der Grundplatte 1 hohe Reibungskräfte wirken, die noch durch die oben angesprochene Vakuumbeaufschlagung vergrößert werden, können die Kolben-Zylinder-Antriebe 50, 53 und die noch ihre Ausfahrbewegungen durchführenden Linearantriebe 44, 45 nicht die die Form bildenden Formabschnitte 3 in Produktionsrichtung 6 verschieben, sondern lediglich die neu an die Formstrecke 2 herangeführten Formabschnitts-Hälften 4, 5 fest andrücken und soweit in Produktionsrichtung 6 nachschieben, bis die in Produktionsrichtung 6 voreilende Formabschnitts-Hälfte 4 einen Endschalter 69 betätigt, was zu Beginn der Auseinanderfahrbewegung der beiden in Produktionsrichtung 6 voreilenden zugeordneten Formabschnitts-Hälften 4, 5 an der Keilplatte 18 erfolgt. Durch die Betätigung dieses Schalters 69 werden die Linearantriebe 41 und 44 derart mit Druckluft beaufschlagt, daß die Spannzapfen 42 aus der Ausnehmung 43 des Spannprismas 33 herausgezogen und die Kolbenstange 46 eingefahren wird. Hierdurch wird die Spannvorrichtung 40 von der Formabschnitts-Hälfte 4 bzw. 5 entkoppelt und anschließend auf einem gekrümmten Bahnabschnitt 70 aus der Bewegungsbahn der Spannprismen 33 in der Formstrecke 2 herausgeschwenkt. Da die Kolben-Zylinder-Antriebe 50, 53 bereits mit Druckluft in dem Sinne beaufschlagt sind, daß ihre Kolbenstangen 51, 55 einfahren, wird der Schlitten 36 beschleunigt auf einem geradlinigen Bahnabschnitt 71 wieder bis in die Ausgangsposition zurückbewegt, wo wiederum zwei Formabschnitts-Hälften 4, 5, die bereits über die Keilplatte 18 teilweise auseinandergefahren sind, angekoppelt werden.

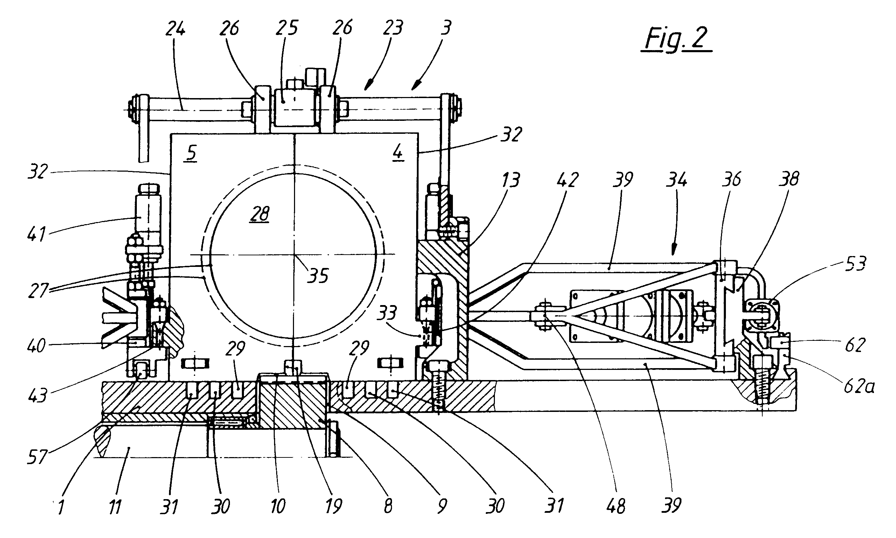

Insoweit als die Vorrichtung bisher in ihrem Aufbau und in ihrer Funktion anhand der Fig. 1 und 2 beschrieben ist, ist sie aus der EP 0 007 556 B1 (entspr. US-PS 4 212 618, JP-PS 1 102 384, CA-PS 1 128 265) bekannt.

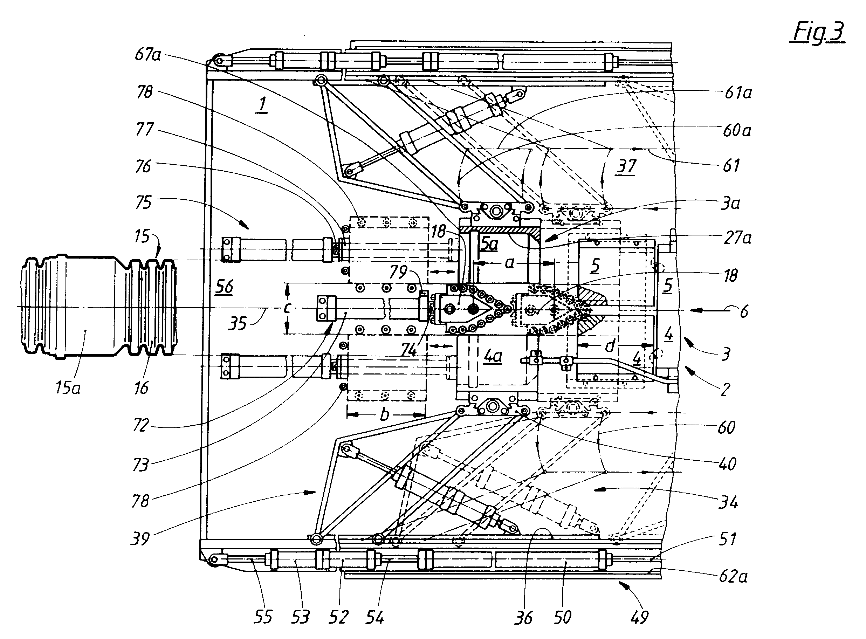

Während bei der bekannten Ausführungsform die Keilplatte 18 ortsfest mit der Grundplatte 1 verbunden, beispielsweise verschraubt, ist, ist sie bei der der Erfindung entsprechenden Ausführungsform nach Fig. 3 mit einem als Linearantrieb ausgebildeten, parallel zur Achse 35 wirkenden Verschiebeantrieb 72 verbunden, mittels dessen die Keilplatte 18 zwischen einer in Fig. 3 gestrichelt dargestellten Position, die der Position nach Fig. 1 entspricht, und einer in Fig. 3 ausgezogen dargestellten Position verschoben werden kann. In der letztgenannten Position ist die Keilplatte 18 in Produktionsrichtung 6 zum Endbereich 56 der Grundplatte 1 hin verschoben. Der Abstand a dieser beiden Positionen der Keilplatte 18 voneinander ist gleich der Länge b eines zusätzlich in die Formstrecke 2 einzuführenden, aus zwei Formabschnitts-Hälften 4a, 5a bestehenden Formabschnitts 3a. In diesem Fall befindet sich dieser Formabschnitt 3a zusätzlich in der Formstrecke 2, die also insgesamt um das Maß b verlängert worden ist. Der Verschiebeantrieb 72 ist durch einen pneumatisch beaufschlagbaren Kolben-Zylinder-Antrieb gebildet, dessen Zylinder 73 an der Grundplatte 1 befestigt ist, während an seiner Kolbenstange 74 die Keilplatte 18 befestigt ist. Beiderseits des Verschiebeantriebs 72 sind zwei parallel zum Verschiebeantrieb 72 wirkende und ebenfalls an der Grundplatte 1 wirkende Zuführ- und Entnahme-Antriebe 75 angeordnet, die ebenfalls als pneumatisch beaufschlagbare Kolben-Zylinder-Antriebe ausgebildet sind. Am freien Ende der jeweiligen Kolbenstange 76 ist eine Greifeinrichtung 77 zum Ergreifen einer Formabschnitts-Hälfte 4a bzw. 5a angebracht. Diese Greifeinrichtung 77 kann durch einen Elektromagneten oder eine Magnetspannvorrichtung gebildet sein, die an der vorderen Stirnseite 67a der Formabschnitts-Hälfte 4a bzw. 5a angreift. Im Verschiebeweg der jeweiligen Greifeinrichtung 77 sind auf der Grundplatte 1 entlang einem U-förmigen Verlauf Führungsanschläge 78 vorgesehen, durch die die Position einer zusätzlichen Formabschnitts-Hälfte 4a bzw. 5a bei eingezogener Kolbenstange 76 des Zuführ- und Entnahme-Antriebs 75 relativ zur Grundplatte 1 und damit zur Formstrecke 2 positioniert wird.

In Fig. 3 sind auch die unterschiedlichen Positionen dargestellt, in denen die Rückführ-Vorrichtungen 34 einerseits die Formabschnitts-Hälften 4, 5 - wie oben beschrieben - dann am Ende der Formstrecke 2 übernehmen, wenn keine zusätzlichen Formabschnitts-Hälften 4a, 5a in der Formstrecke 2 sind. Diese Stellung der Rückführ-Vorrichtungen 34 ist in Fig. 3 gestrichelt dargestellt. Die entsprechende Position der Rückführ-Vorrichtungen 34 für den Fall, daß ein zusätzlicher Formabschnitt 3a sich auf der Formstrecke 2 befindet, ist in Fig. 3 ausgezogen dargestellt. Die gekrümmten Bahnabschnitte 60a, auf denen die Formabschnitts-Hälften 4, 5 bzw. 4a, 5a bei dieser Konstellation nach außen geführt werden, sind ebenfalls eingezeichnet. Der geradlinige Bahnabschnitt 61a, um den der geradlinige Bahnabschnitt 61 sich hierbei verlängert, entspricht der Länge b. Diese Verlängerung der Rücklaufstrecke 37 wird dadurch möglich, daß der Antrieb 49 insgesamt unterschiedlich lang ausfahren kann. Konkret kann dies dadurch realisiert werden, daß der Kolben-Zylinder-Antrieb 50 in einer Zwischenposition angehalten werden kann, bei der die Kolbenstange um das Maß b ausgefahren ist. Aus dieser Position erfolgt die Rückführung der Formabschnitts-Hälften 4 bzw. 5, wenn kein zusätzlicher Formabschnitt 3a in der Formstrecke 2 ist. Wenn dagegen ein zusätzlicher Formabschnitt 3a in der Formstrecke 2 ist, dann wird die Kolbenstange 51 vollständig eingefahren. Die entsprechende Ansteuerung erfolgt über einen Schalter 79, der von der Keilplatte 18 betätigt wird, wenn die Kolbenstange 74 des Verschiebeantriebs 72 eingefahren wird.

Das Einführen eines zusätzlichen Formabschnitts 3a in die Formstrecke bzw. das Entfernen dieser zusätzlichen Formabschnitts-Hälften 4a, 5a aus der Formstrecke 2 geht wie folgt vor sich:

Ausgangspunkt ist gemäß Fig. 3, daß sich an jeder Greifeinrichtung 77 jedes Zuführ- und Entnahme-Antriebs 75 eine zusätzliche Formabschnitts-Hälfte 4a bzw. 5a in ihrer inaktiven Position zwischen den Führungsanschlägen 78 befindet. Die Kolbenstange 74 des Verschiebeantriebs 72 ist ausgefahren, so daß sich die Keilplatte 18 in der dem Spritzkopf 7 näher befindlichen stromaufwärtigen Position befindet, wie sie oben zu Fig. 1 und 2 ausführlich beschrieben wurde. Nachdem ein Paar von Formabschnitts-Hälften 4, 5 in der oben beschriebenen Weise aus der Formstrecke 2 herausgeführt und mittels der Rückführ-Vorrichtungen 34 über die gekrümmten Bahnabschnitte 60 nach außen geführt ist, wird der Verschiebeantrieb 72 in der Weise mit Druckluft beaufschlagt, daß dessen Kolbenstange 74 in den Zylinder 73 einfährt und die Keilplatte 18 sich um das Maß a vom Spritzkopf 7 entfernt. Hierbei wird der Schalter 79 betätigt, der eine Beaufschlagung der Zuführ- und Entnahme-Antriebe 75 mit Druckluft in der Weise auslöst, daß deren Kolbenstangen 76 entgegen der Produktionsrichtung 6 ausfahren und die an ihren Greifeinrichtungen 77 befindlichen zusätzlichen Formabschnitts-Hälften 4a und 5a zur Formstrecke 2 hin, also stromaufwärts, befördern. Ihr Abstand c voneinander quer zur Achse 35 entspricht hierbei dem Abstand c, den die Formabschnitts-Hälften 4, 5 eines Formabschnitts 3 voneinander haben, wenn sie über die Keilplatte 18 auseinandergeschoben worden sind. Die Greifeinrichtungen 77 werden gelöst und die Antriebe 75 derart mit Druckluft beaufschlagt, daß ihre Kolbenstangen 76 wieder eingefahren werden. Durch den Schalter 79 wird die Ansteuerung des Kolben-Zylinder-Antriebs 50 in der Weise geändert, daß dessen Kolbenstange 51 vollständig eingefahren wird, so daß die Rückführ-Vorrichtung 34 in die in Fig. 3 ausgezogen dargestellte Stellung verbracht wird. Hierbei übernimmt jeweils eine Rückführ-Vorrichtung 34 die zusätzliche Formabschnitts-Hälfte 4a bzw. 5a und transportiert sie über den gekrümmten Bahnabschnitt 60a, den geradlinigen ergänzenden Bahnabschnitt 61a und den geradlinigen Bahnabschnitt 61 in der bereits geschilderten Weise zum Beginn 22 der Formstrecke 2. Wenn ein zusätzlicher Formabschnitt 3a in die Formstrecke 2 eingebracht wird, dann ist diese entsprechend verlängert.

Wenn die zusätzlichen Formabschnitts-Hälften 4a, 5a wieder aus der Formstrecke 2 entfernt werden sollen, dann wird nach dem Auseinanderfahren der zusätzlichen Formabschnitts-Hälften 4a, 5a am Ende der Formstrecke 2 der Verschiebeantrieb 72 in der Weise mit Druckluft beaufschlagt, daß seine Kolbenstange 74 ausfährt und die Keilplatte 18 in ihre dem Spritzkopf 7 nähere Position verbringt, so daß das nachfolgende Paar von Formabschnitts-Hälften 4, 5 zu einem früheren Zeitpunkt - wie oben beschrieben - auseinandergefahren wird. Gleichzeitig wird hierbei wieder der Schalter 79 betätigt, der die geschilderte Verkürzung des Verschiebeweges des Kolben-Zylinder-Antriebs 50 auslöst. Außerdem werden die Kolbenstangen 76 mit den Greifeinrichtungen 77 der Zuführ- und Entnahme-Antriebe 75 ausgefahren und ergreifen die aus dem Kreislauf herauszunehmenden zusätzlichen Formabschnitts-Hälften 4a, 5a. Die Ansteuerung der Antriebe 75 wird umgekehrt, so daß die Kolbenstangen 76 einfahren und die zusätzlichen Formabschnitts-Hälften 4a, 5a in ihrer Parkposition zwischen den Führungsanschlägen 78 ziehen.

Die Länge b des zusätzlichen Formabschnitts 3a kann größer oder kleiner sein als die Länge d des üblichen Formabschnitts 3. Der zusätzliche Formabschnitt 3a kann zur Ausformung einer Muffe 15a an dem ansonsten über seine Länge mit Querrillen 16 versehenen Rohr 15 oder zur Ausformung einer Muffe 15a und zusätzlich eines nicht dargestellten Spitzendes ausgebildet sein. In Fig. 3 ist für die Formabschnitts-Hälfte 5a angedeutet, wie in einem solchen Fall die Innenwände 27a der zusätzlichen Formabschnitts-Hälften 4a, 5a ausgebildet sind.

Es kann auch zweckmäßig sein, hintereinander eine Muffe 15a und ein nicht dargestelltes Spitzende auszubilden, so daß nach dem jeweiligen Durchtrennen des Rohres 15 zwischen der Muffe 15a und dem Spitzende Rohrabschnitte erzeugt werden, die an einem Ende eine Muffe 15a und am anderen Ende ein Spitzende aufweisen. Die Rohrabschnitte können in einem durch die Länge d vorgegebenen Raster beliebig lang sein.

## Patentansprüche

1. Vorrichtung zur Herstellung von Rohren (15) aus thermoplastischem Kunststoff mit Querprofilierung, mit im Anschluß an einen Spritzkopf (7) in zwei einander gegenüberliegenden Reihen angeordneten, im Kreislauf geführten Formabschnitts-Hälften (4, 5), die sich paarweise entlang einer geraden Formstrecke (2) zu einer geschlossenen Hohlform ergänzen, die an ihrer Innenseite die Querprofilierung formende Innenwände (27) aufweisen, wobei jede der nicht miteinander verbundenen Formabschnitts-Hälften (4, 5) einer Reihe mittels einer Rückführ-Vorrichtung (34) am stromabwärtigen Ende (17) der Formstrecke (2) im wesentlichen quer zur Produktionsrichtung (6) aus der Formstrecke (2) herausgeführt und auf einer Rücklaufstrecke (37) zum stromaufwärtigen Ende (22) der Formstrecke (2) zurückgeführt und dort wieder in die Formstrecke (2) hineingeführt und an die jeweils in Produktionsrichtung (6) vorlaufende Formabschnitts-Hälfte (4, 5) angesetzt wird, wobei die Rückführ-Vorrichtung (34) als Schlitten (36) mit einem Schwenkarm (39) ausgebildet ist, wobei am freien Ende dieses Schwenkarmes (39) ein Koppelorgan zur lösbaren Ankoppelung an einer Formabschnitts-Hälfte (4, 5) angeordnet ist, und wobei Antriebe zum durchgehenden Bewegen des Koppelorgans vom stromabwärtigen Ende (17) der Formstrecke (2) zu deren stromaufwärtigem Ende (22) und zurück vorgesehen sind und wobei am stromabwärtigen Ende (17) der Formstrecke (2) ein die Formabschnitts-Hälften (4, 5) auseinanderführendes, mit an den Formabschnitts-Hälften (4, 5) angeordneten Schrägflächen (19) zusammenwirkendes Keilstück (18) angeordnet ist, dadurch gekennzeichnet, daß das Keilstück (18) parallel zur Produktionsrichtung (6) mittels eines Verschiebeantriebes (72) verschiebbar ist und daß mittels eines Zuführ- und Entnahme-Antriebs (75) entgegen der Produktionsrichtung (6) verschiebbare Greifeinrichtungen (77) vorgesehen sind, mittels derer je eine zusätzliche Formabschnitts-Hälfte (4a, 5a) zum stromabwärtigen Ende (22) der Formstrecke (2) verbracht bzw. in Produktionsrichtung (6) von dieser entfernt und in eine Parkposition verbracht werden kann und daß das Koppelorgan mittels der Antriebe in zwei Positionen am stromabwärtigen Ende (17) der Formstrecke (2) bringbar ist, deren Abstand (a) in Produktionsrichtung (6) voneinander der Länge (b) der Formabschnitts-Hälften (4a, 5a) in Produktionsrichtung (6) entspricht.

2. Vorrichtung nach Anspruch 1, dadurch gekennzeichnet, daß die zusätzlichen Formabschnitts-Hälften (4a, 5a) in der Parkposition zwischen Führungsanschlägen (78) positioniert sind.

3. Vorrichtung nach Anspruch 1 oder 2, dadurch gekennzeichnet, daß die Greifeinrichtungen (77) als Magnete ausgebildet sind.

4. Vorrichtung nach einem der Ansprüche 1 bis 3, dadurch gekennzeichnet, daß der Verschiebeantrieb (72) und die Zuführ- und Entnahme-Antriebe (75) Linearantriebe sind.

5. Vorrichtung nach einem der Ansprüche 1 bis 4, dadurch gekennzeichnet, daß die zusätzlichen Formabschnitts-Hälften (4a, 5a) zur Formung einer Muffe (15a) im Rohr (15) ausgebildet sind.

6. Vorrichtung nach Anspruch 5, dadurch gekennzeichnet, daß die zusätzlichen Formabschnitts-Hälften (4a, 5a) zur Formung einer Muffe (15a) und eines Spitzendes im Rohr (15) ausgebildet sind.

## Claims

1. An apparatus for the manufacture of corrugated pipes (15) of thermoplastic plastics comprising circulating mold segment halves (4, 5), which are disposed in two opposite rows subsequent to an injection head (7) and of which two at a time combine along a straight molding path (2) to form a closed hollow mold, and which, on their inside, have inside walls (27) forming the corrugation, each of the mold segment halves (4, 5), not connected with each other, of a row being guided out of the molding path (2) substantially at right angles to the direction of production (6) at the downstream end (17) of the molding path (2) by means of a return device (34), and being returned to the upstream end (22) of the molding path (2) along a return path (37), where they are again inserted in the molding path (2) and attached to the mold segment half (4, 5) leading in the direction of production (6), the return device (34) being a slide (36) with a pivot arm (39), a coupling member being arranged on the free end of this pivot arm (39) for the releasable coupling to a mold segment half (4, 5), and drives being provided for continuously moving the coupling member from the downstream end (17) of the molding path (2) to the latter's upstream end (22) and back again, and a wedge element (18) being disposed at the downstream end (17) of the molding path (2), separating the mold segment halves (4, 5) and cooperating with slopings (19) disposed on the halves (4, 5), characterized in that the wedge element (18) is displaceable parallel to the direction of production (6) by means of a displacing drive (72), and in that grab equipments (77) are provided, which are displaceable counter to the direction of production (6) by means of a supply and removal drive (75) and by means of which one additional mold segment half (4a, 5a) at a time can be moved to the downstream end (22) of the molding path (2), removed from the latter in the direction of production (6) and moved into a parking position, and in that the coupling member is movable by means of the drives into two positions at the downstream end (17) of the molding path (2), the distance (a) of which positions from each other in the direction of production (6) corresponds to the length (b) of the mold segment halves (4a, 5a) in the direction of production (6).

2. An apparatus according to claim 1, characterized in that in the parking position, the additional mold segment halves (4a, 5a) are positioned by guide stops (78).

3. An apparatus according to claim 1 or 2, characterized in that the grab equipments (77) are magnets.

4. An apparatus according to one of claims 1 to 3, characterized in that the displacing drive (72) and the supply and removal drives (75) are linear drives.

5. An apparatus according to one of claims 1 to 4, characterized in that the additional mold segment halves (4a, 5a) are designed for the molding of a socket (15a) on the pipe (15).

6. An apparatus according to claim 5, characterized in that the additonal mold segment halves (4a, 5a) are designed for the molding of a socket (15a) and a spigot on the pipe (15).

## Revendications

1. Dispositif pour la fabrication de tubes (15) en matière thermoplastique munis d'un profilage transversal, présentant des moitiés (4, 5) de segments de moule qui sont agencées en deux rangées mutuellement opposées dans la continuité d'une tête d'injection (7), sont guidées en circuit fermé, se complètent par paires le long d'un trajet rectiligne de moulage (2), pour former un moule creux fermé, et sont pourvues, sur leur face interne, de parois intérieures (27) moulant le profilage transversal, dispositif dans lequel chacune des moitiés (4, 5) de segments de moule d'une rangée, qui ne sont pas reliées les unes aux autres, est extraite du trajet de moulage (2) au moyen d'un dispositif de rétroaction (34) à l'extrémité aval (17) dudit trajet de moulage (2), pour l'essentiel transversalement par rapport à la direction de production (6), est renvoyée, sur un trajet de retour (37), vers l'extrémité amont (22) du trajet de moulage (2), dans la zone de laquelle elle est réintroduite sur ledit trajet de moulage (2), puis est rattachée à la moitié (4, 5) d'un segment de moule qui est respectivement précédente dans la direction de production (6) ; dans lequel le dispositif de rétroaction (34) est réalisé sous la forme d'un chariot (36) équipé d'un bras pivotant (39) ; dans lequel un organe d'accouplement est installé à l'extrémité libre de ce bras pivotant (39), en vue de l'accouplement libérable à une moitié (4, 5) d'un segment de moule ; dans lequel des entraînements sont prévus pour le mouvement continu de l'organe d'accouplement depuis l'extrémité aval (17) du trajet de moulage (2) jusqu'à l'extrémité amont (22) de celui-ci, et inversement ; et dans lequel une pièce cunéiforme (18), disposée à l'extrémité aval (17) du trajet de moulage (2), dissocie les unes des autres les moitiés (4, 5) des segments de moule et coopère avec des surfaces inclinées (19) ménagées sur lesdites moitiés (4, 5) de segments de moule, caractérisé par le fait que la pièce cunéiforme (18) peut être animée de coulissements parallèlement à la direction de production (6), au moyen d'un entraînement (72) en coulissement ; par le fait qu'il est prévu des systèmes de préhension (77) qui peuvent coulisser en sens inverse de la direction de production (6), au moyen d'un entraînement (75) d'amenée et de prélèvement, et à l'aide desquels une moitié additionnelle considérée (4a, 5a) d'un segment de moule peut être déplacée vers l'extrémité aval (22) du trajet de moulage (2) ou peut être respectivement éloignée de ce dernier dans la direction de production (6), et peut être transférée à une position de remisage ; et par le fait que l'organe d'accouplement peut être amené, au moyen des entraînements, à deux positions qui se trouvent à l'extrémité aval (17) du trajet de moulage (2) et dont la distance mutuelle (a), dans la direction de production (6), correspond à la longueur (b) des moitiés (4a, 5a) de segments de moule dans ladite direction de production (6).

2. Dispositif selon la revendication 1, caractérisé par le fait que les moitiés additionnelles (4a, 5a) des segments de moule sont positionnées entre des butées de guidage (78) dans la position de remisage.

3. Dispositif selon la revendication 1 ou 2, caractérisé par le fait que les systèmes de préhension (77) sont réalisés sous la forme d'aimants.

4. Dispositif selon l'une des revendications 1 à 3, caractérisé par le fait que l'entraînement (72) en coulissement et les entraînements (75) d'amenée et de prélèvement sont des entraînements linéaires.

5. Dispositif selon l'une des revendications 1 à 4, caractérisé par le fait que les moitiés additionnelles (4a, 5a) des segments de moule sont réalisées en vue du moulage d'un manchon (15a) dans le tube (15).

6. Dispositif selon la revendication 5, caractérisé par le fait que les moitiés additionnelles (4a, 5a) des segments de moule sont réalisées en vue du moulage d'un manchon (15a) et d'une extrémité pointue dans le tube (15).
